# EUROPÄISCHE PATENTANMELDUNG

(11) **EP 1 083 476 A2**
(43) Veröffentlichungstag der Anmeldung: **14.03.2001**
(21) Anmeldenummer: 00119560.1
(22) Anmeldetag: 07.09.2000
(51) Int. Cl.: G06F 1/32

(54) **Verfahren und Vorrichtung zur Leistungsbegrenzung elektrischer Verbraucher**

(30) Priorität: 10.09.1999 DE 19943286
(71) Anmelder: GRUNDIG Aktiengesellschaft, 90471 Nürnberg (DE)
(72) Erfinder: Schneidzig, Peter, 90471 Nürnberg (DE)

(57) **Zusammenfassung**

Die vorliegende Erfindung betrifft ein Verfahren und eine Vorrichtung zur Begrenzung des Energiebedarfs elektrischer Verbraucher, insbesondere für Geräte der Unterhaltungselektronik, die hinsichtlich auftretender Verlustleistung optimiert sein müssen.

Bei der vorliegenden Erfindung wird die im Gerät auftretende Verlustleistung dadurch minimiert, daß eine Steuereinrichtung den für den Betrieb des Geräts benötigten Energiebedarf auf einen voreinstellbaren Wert begrenzt. und anhand des begrenzten Energiebedarfs eine Energieversorgung im Gerät derart ansteuert, daß nur der begrenzte Energiebedarf zur Verfügung gestellt wird.

## Beschreibung

Die vorliegende Erfindung betrifft ein Verfahren und eine Vorrichtung zur Leistungsbegrenzung elektrischer Verbraucher, insbesondere von elektrischen Verbrauchern in Geräten der Unterhaltungselektronik.

Bei Geräten der Unterhaltungselektronik tritt häufig das Problem auf, daß wegen der engen räumlichen Anordnung der elektrischen Verbraucher, d. h. der Baugruppen der Geräte, Probleme mit der Abführung der entstehenden Verlustwärme auftreten. Andere Probleme entstehen dadurch, daß Baugruppen teilweise auch dann mit elektrischer Energie versorgt werden, obwohl sie zu bestimmten Zeitpunkten eigentlich nicht oder nur teilweise benötigt werden.

Es ist daher Aufgabe der vorliegenden Erfindung, ein Verfahren und eine Vorrichtung anzugeben, bei denen die durch auftretende Verlustleistung verursachten Probleme vermieden werden.

Bei der vorliegenden Erfindung wird diese Aufgabe durch die Merkmale der Ansprüche 1 und 6 gelöst.

Bei dem erfindungsgemäßen Verfahren bzw. der erfindungsgemäßen Vorrichtung wird dabei von der Überlegung ausgegangen, daß der Energieverbrauch der elektrischen Verbraucher auf eine Obergrenze festgelegt wird und den elektrischen Verbrauchern nur der begrenzte Energiebedarf zur Verfügung gestellt wird.

Der Vorteil des erfindungsgemäßen Verfahrens bzw. der erfindungsgemäßen Vorrichtung ist darin zu sehen, daß in den elektrischen Verbrauchern nicht unnötig elektrische Energie verbraucht wird, wodurch die insgesamt auftretende Verlustleistung verringert wird und somit eine unerwünschte Erwärmung des Geräts mit allen bekannten negativen Folgen unterbleibt. Zugleich erfolgt ein Energiespareffekt.

Eine Weiterbildung der Erfindung geht von der Verwendung einer modularen Energieversorgung aus, die eine Mehrzahl von Energiequellen enthält, denen die elektrischen Verbraucher zugeordnet sind. Je nach Bedarf werden einzelne der Energiequellen ein- oder ausgeschaltet.

Eine andere Weiterbildung der Erfindung geht von der Überlegung aus, die Verlustleistung dadurch zu verringern, daß die Höhe der Ausgangsspannung von verwendeten Energiequellen entsprechend des begrenzten Energiebedarfs variiert wird.

Nach verschiedenen Ausführungsformen der Erfindung kann die Begrenzung des Energiebedarfs durch eine Festlegung des maximalen Energieverbrauches, in Abhängigkeit des Betriebszustandes der einzelnen elektrischen Verbraucher, durch eine Überwachung einer maximal zulässigen Verlustleistung oder die Überwachung einer maximal zulässigen Betriebstemperatur ermittelt werden.

Entsprechend einer Ausführungsform der erfindungsgemäßen Vorrichtung eignen sich als Energieversorgungseinrichtungen besonders gut regelbare Schaltnetzteile, da diese im Vergleich zu Linearreglern deutlich geringere Verlustleistungen erzeugen.

Weitere Vorteile der vorliegenden Erfindung ergeben sich aus der nachfolgenden Beschreibung des erfindungsgemäßen Verfahrens sowie der erfindungsgemäßen Vorrichtung anhand von Figuren.

Es zeigt
- FIG. 1: ein Prinzipschaltbild eines Ausführungsbeispiels eines die erfindungsgemäßen Vorrichtung aufweisenden Geräts,
- FIG. 2: einen Ausschnitt aus dem Prinzipschaltbild nach Fig. 1, in einer detaillierteren Darstellung,
- FIG. 3: ein Prinzipschaltbild eines an sich bekannten Schaltnetzteiles,
- FIG. 4: eine Darstellung des Menüs mit der Auswahl für den Betrieb mit begrenztem Energieverbrauch,
- FIG. 5: ein Blockschaltbild einer Realisierungsmöglichkeit zur Begrenzung des Energieverbrauchs einer Bildschirmablenkeinheit und
- FIG. 6: ein Blockschaltbild einer Realisierungsmöglichkeit zur Begrenzung des Energieverbrauchs einer Audioverstärkereinheit.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind.

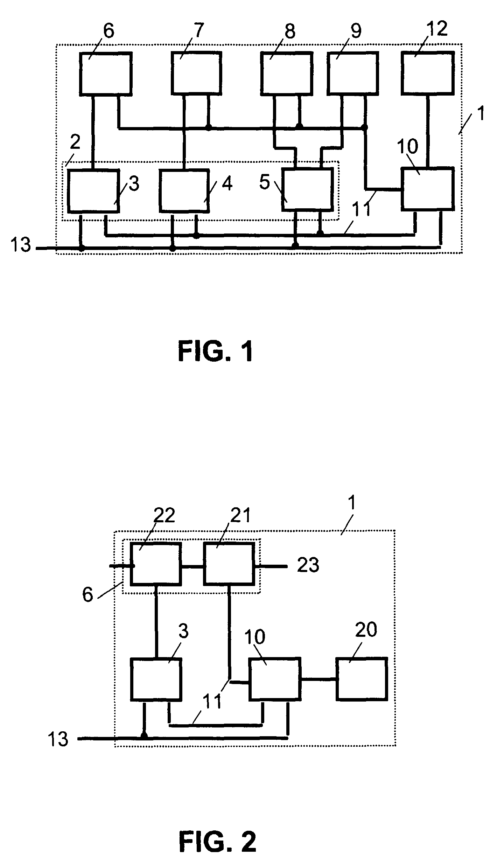

Fig.1 zeigt ein Prinzipschaltbild eines Ausführungsbeispiels eines die erfindungsgemäße Vorrichtung aufweisenden Geräts 1. Das Gerät 1 ist insbesondere ein Gerät der Unterhaltungselektronik, beispielsweise ein Autoradio oder ein Fernsehgerät. Das Gerät 1 umfaßt eine modular aufgebaute Energieversorgungseinrichtung 2, die aus mehreren Einrichtungen 3 bis 5 zur Energieversorgung, z. B. regelbaren Schaltnetzteilen oder regelbaren Spannungsquellen, besteht. An die Schaltnetzteile 3 bis 5 sind elektrische Verbraucher 6 bis 9, z. B. ein Audioverstärker 6, angeschlossen. Die elektrischen Verbraucher 6 bis 9 sowie die Schaltnetzteile 3 bis 5 sind mittels eines Busses 11 mit einer Steuereinrichtung 10 verbunden. Darüber hinaus sind die Schaltnetzleile 3 bis 5 sowie die Steuereinrichtung 10, die zur unterbrechungsfreien Energieversorgung über eine eigene Einrichtung zur Energieversorgung verfügen kann, an einer Versorgungsspannung 13, beispielsweise einer Netzspannung, angeschlossen.

An die Steuereinrichtung 10 ist außerdem ein Temperaturmeßeinrichtung 12 angeschlossen. Die Steuereinrichtung 10 kann von einem Mikrocomputer gebildet werden, die Temperaturmeßeinrichtung 12 beispielsweise von einem Widerstand mit bekanntem Temperaturkoeffizienten und einem Analog/Digital-Wandler, der die Werte des Widerstands für den Mikrokomputer 10 digitalisiert. Als Bus 11 kann der im Bereich der Unterhaltungselektronik weitverbreitete I²C-Bus (Inter Integrated Circuit Bus) verwendet werden.

Bei Inbetriebnahme kann von einem Benutzer der maximale Energiebedarf des Gerätes 1 voreingestellt werden. Während des Betriebs des Geräts 1 wird von der Steuereinrichtung 10 der aktuell benötigte Energiebedarf der elektrischen Verbraucher 6 bis 9 festgestellt und die Schaltnetzteile 3 bis 5 werden durch die Steuereinrichtung 10 derart gesteuert, daß die von ihnen zur Verfügung gestellte elektrische Energie den eingestellten maximalen Energiebedarf nicht überschreitet. Hierbei wird berücksichtigt, daß verschiedene Baugruppen, insbesondere digitale Schaltgruppen, mit einem definierten Spannungspegel gespeist werden müssen.

Die Ermittlung des aktuellen Energiebedarfs der elektrischen Verbraucher 6 bis 9 kann in einer ersten Ausführungsform dadurch erfolgen, daß die Betriebszustände der einzelnen elektrischen Verbraucher 6 bis 9 durch die Steuereinrichtung 10 ermittelt werden. Beispielsweise kann festgestellt werden, ob momentan alle elektrischen Verbraucher 6 bis 9 für den Betrieb des Geräts 1 benötigt werden. Wird dabei festgestellt, daß beispielsweise der elektrische Verbraucher 7 augenblicklich nicht betrieben werden muß, schaltet die Steuereinrichtung 10 das zugeordnete Schaltnetzteil 4 ab. Falls zu einem späteren Zeitpunkt der elektrische Verbraucher 7 in Betrieb gesetzt werden soll, schaltet die Steuereinrichtung 10 das zugeordnete Schaltnetzteil 4 wieder ein.

Außerdem kann es vorgesehen sein, daß für das Gerät 1 eine maximal zulässige Verlustleistung vorgegeben ist. Wird die maximal zulässige Verlustleistung überschritten, kann die Steuereinrichtung 10 den Energieverbrauch der elektrischen Verbraucher 6 bis 9 beispielsweise dadurch verringern, daß weniger wichtige elektrische Verbraucher, welche für die Funktion des Gerätes im aktuellen Zustand keinen direkten Einfluß haben, abgeschaltet werden.

Daneben kann es vorgesehen sein, daß für das Gerät 1 eine maximal zulässige Betriebstemperatur vorgegeben ist. Diese kann mittels der an die Steuereinrichtung 10 angeschlossenen Temperaturmeßeinrichtung 12 überwacht werden. Bei Überschreiten der zulässigen Betriebstemperatur greift die Steuereinrichtung 10 ein und verringert die Energiezufuhr der Schaltnetzteile 3 bis 5 an die elektrischen Verbraucher 6 bis 9.

Fig. 2 zeigt einen Ausschnitt aus dem in Fig. 1 dargestellten Gerät 1 in einer detaillierteren Darstellung. Der elektrische Verbraucher 6 ist ein Verstärker für ein Audiosignal mit einer Endstufe 22 und einem digitalen Klangsteller 21, an dem eine Audiosignal 23 einer nicht dargestellten Audiosignalquelle anliegt. Die Wiedergabelautstärke des von der Endstufe 22 verstärkten und zur Verfügung gestellten Audiosignals kann mittels eines Bedienelements 20 eingestellt werden. Die Stellung des Bedienelements 20, und damit die gewünschte Lautstärke, wird von der Steuereinrichtung 10 überwacht und entsprechend der erkannten Stellung am digitalen Klangsteller 21 eingestellt. Um die an der Endstufe auftretende Verlustleistung zu verringern, wird, in Abhängigkeit von der Stellung des Bedienelements 20, die vom regelbaren Schaltnetzteil 3 abgegebene Spannung durch die Steuereinrichtung 10 geregelt. Bei einer Stellung des Bedienelements 20, die einer geringen Lautstärke entspricht, wird die Spannung des regelbaren Schaltnetzteils 3 verringert, wohingegen sie für eine Stellung des Bedienelements 20, die der maximalen Lautstärke entspricht, von der Steuereinrichtung 10 bis auf die üblicherweise verwendete vollständige Betriebsspannung erhöht wird. Insgesamt wird die Spannung des Schaltnetzteils 3 durch die Steuereinrichtung 10 in Abhängigkeit von der Aussteuerung des Audioverstärkers 6 geregelt. Anstelle der beschriebenen Auswertung der Stellung des Bedienelements 20 kann demzufolge auch direkt die Aussteuerung der Endstufe oder der Pegel des Eingangssignals der Endstufe ausgewertet werden.

Insbesondere beim Einsatz von digitalen Signalprozessoren ist die Regelung der Leistung der Endstufe ohne für einen Benutzer merklichen Einfluß durchführbar, da durch den digitalen Signalprozessor das Ausgangssignal verzögert wird und in dieser Verzögerungszeit die entsprechende Versorgungsspannung und somit die Leistung geregelt werden kann.

Es ist offensichtlich, daß die oben jeweils einzeln für sich beschriebenen Maßnahmen zur Ermittlung des Energiebedarfs und/oder die Maßnahmen zur Anpassung der Energieversorgung an den ermittelten und maximal eingestellten Energiebedarf kombiniert werden können, um eine bessere und zuverlässigere Funktionsweise des beschriebenen erfindungsgemäßen Verfahrens bzw. der erfindungsgemäßen Vorrichtung zu gewährleisten.

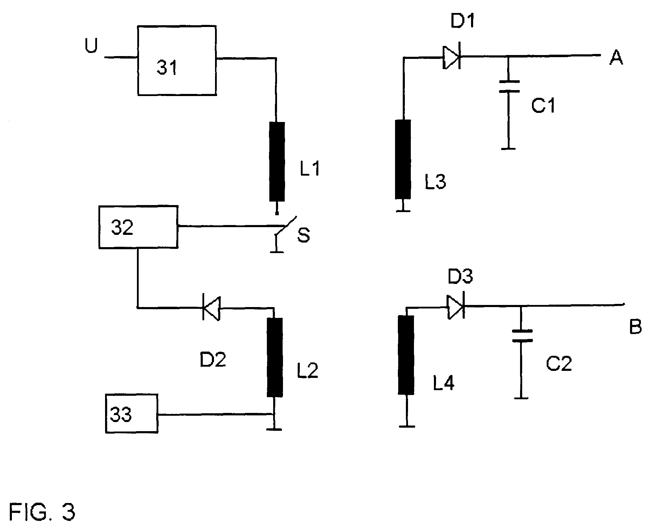

Fig. 3 zeigt den schematischen Aufbau eines an sich bekannten Schaltnetzteils. Das Schaltnetzteil besteht aus einem Gleichrichter 31, Induktivitäten L1, L2, L3, L4, Sperrdioden D1, D2, D3 sowie einem Netzteil-IC 32 und einem Regeleingang 33, über welchen die Stromlast eingestellt werden kann. Im weiteren sind die zwei Siebkondensatoren C1 und C2 angeordnet. An den Klemmen A wird die Energieversorgung (Spannung) für die Zeilenendstufe abgegriffen, an der Klemme B wird die Energieversorgung für die Audioendstufe (Spannung) abgegriffen.

Die Spannung U stellt eine Wechselstromspannung als Eingangsspannung dar. Üblicherweise ist diese 220/240 Volt für europäische Gebiete.

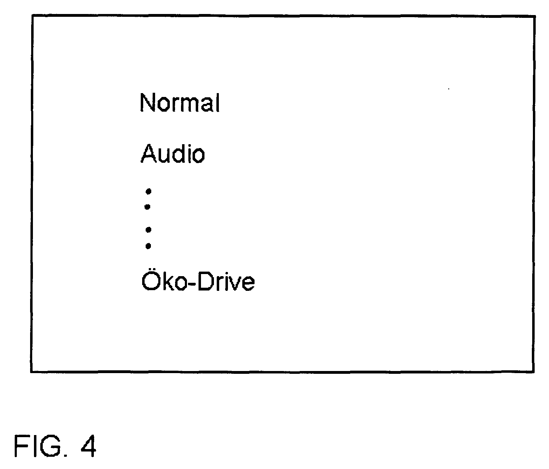

Aus Fig. 4 ist die Menueführung für die Auswahl der Leistungsbegrenzung vorgesehen. Über den aus dem Menue auswählbaren Menuepunkt Öko-Drive wird der Energiesparmodus initialisiert. Durch Rücksetzen dieser Option wird der Energiesparmodus wieder beendet.

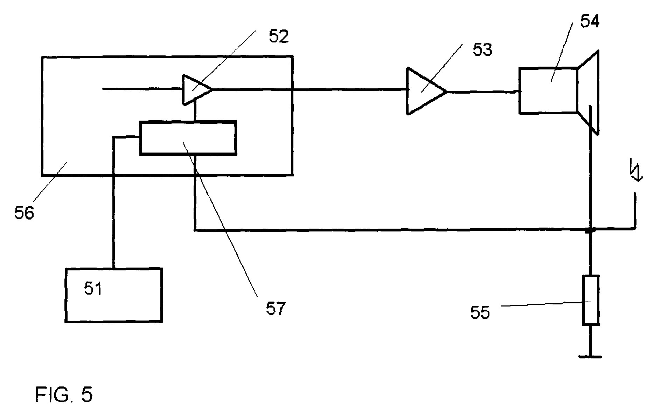

Aus Fig. 5 ist eine Realisierungsmöglichkeit zur Begrenzung des Energieverbrauchs einer Bildschirmablenkeinheit schematisch dargestellt. Die Bildschirmablenkeinheit besteht aus einem Verstärker 52, über welche die Leistung der Ablenkeinheit begrenzbar ist. Dieser Verstärker wird von der Beam Current Limiter-Einheit 57 angesteuert. Die Beam-Current-Limiter-Einheit 57 wiederum wird durch den Mikrocomputer 51 angesteuert. Ist die Menueauswahl Öko-Drive ausgewählt und eine prozentuale Begrenzung der maximalen Leistungsaufnahme eingestellt, so steuert der Mikrocomputer 51 dem Beam-Current-Limiter 57 in der Weise an, daß der Ablenkstrom um den, über den Menuepunkt Öko-Drive eingestellten Wert, z.B. einen Prozentwert, reduziert wird. Diesen reduzierten Wert leitet die Beam Current Limiter-Einheit 57 an den RGB-Verstärker 52 weiter. Die RGB-Signale werden im Verstärker 53 für die Bildröhre 54 verstärkt.

Auf diese Weise ist es möglich, die Leistungsaufnahme definiert zu reduzieren. Setzt man den maximalen Strahlstrom von 1 mA als Grundlage an, entspricht dies etwa 30W Aufnahmeleistung des Netzteils, bei angenommenen Wirkungsgrad des Netzteiles von 100% ,entspricht, zugrunde. Reduziert man über die Öko-Drive-Steuerung diesen Strahlstrom auf 0,6 mA, so sinkt die Entnahmeleistung auf 20W ab. Es ergibt sich eine Energieentnahmeverringerung mehr als 30%.

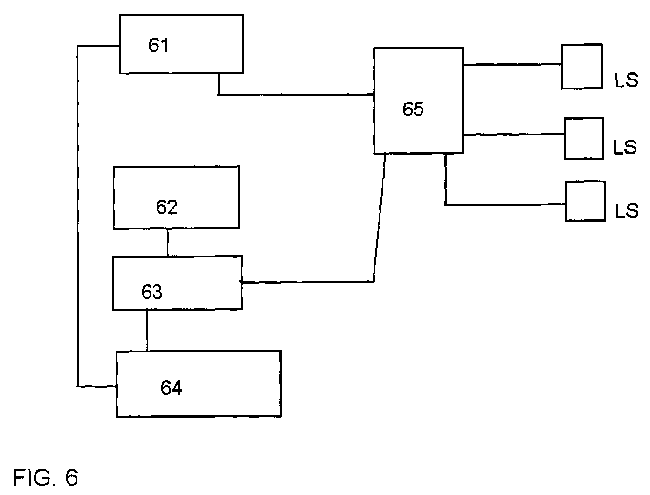

Gemäß dem Blockschaltbild von Fig. 6 ist eine Leistungsbegrenzung des Audiomoduls in einem Fernsehgerät beschrieben. Das Audiomodul besteht aus einem Videoprozessor mit einer Audio-Monosignalverarbeitung 61, einem Videoprozessor mit Audio-Stereosiganlverarbeitung 62, einem Audio-Stereodecoder 63, einem Mikroprozessor 64 sowie einer Endstufe 65, welche mit den Lautsprechern LS gekoppelt ist. Über den Mikroprozessor 64 wird der eingestellte Öko-Drive-Wert, die prozentuale Reduzierung der Leistungsaufnahme die Audio-Endstufe gesteuert. Die Mikroprozessoereiheit 64 beeinflusst den Audio-Stereodecoder 63 und den Video-Prozessor mit Mono-Audio 61. Die Audio-Leistung wird um den voreingestellten Wert über den Öko-Drive-Mode reduziert und dieser reduzierte Wert an de Endverstärker 65 geleitet. Folglich wird die Endstufe nicht voll ausgesteuert, sondern über die Begrenzung die Menueauswahl Öko-Drive in ihrer Leistungsaufnahme beschränkt. Somit begrenzt sich die Aufnahmeleistung um den eingestellten Wert.

### Bezugszeichenliste

- 1: Gerät
- 2: Energieversorgungseinrichtung
- 3: Schaltnetzteil
- 4: Schaltnetzteil
- 5: Schaltnetzteil
- 6: Audioverstärker
- 7: Elektrischer Verbraucher
- 8: Elektrischer Verbraucher
- 9: Elektrischer Verbraucher
- 10: Steuereinrichtung
- 11: Bus
- 12: Temperaturmeßeinrichtung
- 13: Versorgungsspannung
- 21: Klangsteller
- 22: Endstufe
- 23: Audiosignal
- U: Versorgungs-Wechselspannung
- A: Versorgungsspannung für Zeilenendstufe
- B: Versorgungsspannung für Audioendstufe
- L1, L2, L3, L4: Induktivität
- D1, D2, D3: Diode
- S: Schalter
- C1, C2: Kondensator
- 31: Gleichspannungrichter
- 32: Netzteil IC
- 33: Regeleingang
- 51: Mikrocomputer
- 52: RGB-Treiber
- 53: RGB-Verstärker
- 54: CTR
- 55: Widerstand
- 56: RGB-Treiberstufe
- 57: Beam current limiter
- 61: Audio-Monosignalverarbeitung
- 62: Audio-Stereosignalverarbeitung
- 63: Audio-Stereo-Decoder
- 64: Mikroprozessor
- 65: Bildröhre
- LS: Lautsprecher

## Patentansprüche

1. Verfahren zur Begrenzung des Energiebedarfs elektrischer Verbraucher, insbesondere von elektrischen Verbrauchern in Geräten der Unterhaltungselektronik,
**dadurch gekennzeichnet**, daß
der Energiebedarf der elektrischen Verbraucher von einem einstellbaren Wert für den Energiebedarf begrenzt wird, und
die Energieversorgung für die elektrischen Verbraucher in Abhängigkeit von diesem einstellbaren Wert vorgenommen wird, wobei den Verbrauchern maximal der einstellbare Wert für den Energiebedarf als Energiebedarf zur Verfügung gestellt wird.

2. Verfahren nach Anspruch 1,
**dadurch gekennzeichnet**, daß
der einstellbare Wert für den Energiebedarf ein Festwert ist.

3. Verfahren nach Anspruch 1 oder 2,
**dadurch gekennzeichnet**, daß
der einstellbare Wert für den Energiebedarf in einem offenen Menue eingestellt wird.

4. Verfahren nach einem oder mehreren der vorhergehenden Ansprüche,
**dadurch gekennzeichnet**, daß
zur Anpassung der Energieversorgung an den einstrellbaren Wert für den Energiebedarf einem jeden Verbraucher nur ein entsprechender Anteil der Versorgungsenergie zugeleitet wird.

5. Verfahren nach einem oder mehreren der vorhergehenden Ansprüche,
**dadurch gekennzeichnet**, daß
der einstrellbare Wert für den Energiebedarf von einem Nutzer verändert werden kann und/oder zur Begrenzung des Energiebedarfs die elektrischen Verbraucher auf eine vorgegebene maximale Verlustleistung beschränkt werden.

6. Vorrichtung zur Begrenzung des Energiebedarfs elektrischer Verbraucher, insbesondere von elektrischen Verbrauchern (6, ..., 9) in Geräten der Unterhaltungselektronik, mit
einer Energieversorgungseinrichtung (2),
**dadurch gekennzeichnet**, daß
die Energieversorgungseinrichtung (2) modular aus einer Mehrzahl von Einrichtungen zur Energieversorgung (3, 4, 5) aufgebaut ist,
der Mehrzahl von Einrichtungen zur Energieversorgung (3, 4, 5) jeweils mindestens ein elektrischer Verbraucher (6, ..., 9) zugeordnet ist, eine Einrichtung zur Begrenzung des Energiebedarfs elektrischer Verbraucher (6, ..., 9) vorgesehen ist,
eine Steuereinrichtung (10) vorgesehen ist, die aufgrund des von der Einrichtung zur Begrenzung des Energiebedarfs elektrischer Verbraucher (6, ..., 9) eingestellten Energiebedarfs (10) die Mehrzahl von Einrichtungen zur Energieversorgung (3, 4, 5) steuert.

7. Vorrichtung nach Anspruch 6,
**dadurch gekennzeichnet**, daß
die Steuereinrichtung (10) aufgrund der Begrenzung des Energiebedarfs den entnommen Strom von Einrichtungen zur Energieversorgung (3, 4, 5) verringert oder erhöht.

8. Vorrichtung nach Anspruch 6 oder 7,
**dadurch gekennzeichnet**, daß
die Einrichtung zur Begrenzung des Energiebedarfs (10) den Betriebszustand der elektrischen Verbraucher (6, ..., 9) ermittelt.

9. Vorrichtung nach einem der Ansprüche 6 bis 8,
**dadurch gekennzeichnet**, daß
die Einrichtung zur Begrenzung des Energiebedarfs aktuell benötigten Energiebedarfs (10) eine vorgebbare maximale Verlustleistung für das die elektrischen Verbraucher (6, ..., 9) enthaltende Gerät (1) überwacht.

10. Vorrichtung nach einem der Ansprüche 6 bis 9,
**dadurch gekennzeichnet**, daß
die Energieversorgungseinrichtung (2) modular aus mindestens einem regelbaren Schaltnetzteil (3, 4, 5) aufgebaut ist.
